# EUROPÄISCHE PATENTSCHRIFT

(11) **EP 1 167 410 B1**
(45) Veröffentlichungstag und Bekanntmachung des Hinweises auf die Patenterteilung: **02.03.2005**
(21) Anmeldenummer: 01113883.1
(22) Anmeldetag: 07.06.2001
(51) Int. Cl.: C08G 18/18, C08G 18/24

(54) **Verwendung von Ricinolsäure in der Herstellung von Polyurethanschäumen**
Use of ricinoleic acid in the preparation of polyurethane foams
Utilisation de l'acide ricinoléique dans la préparation de mousses de polyuréthane

(30) Priorität: 20.06.2000 DE 10030256
(43) Veröffentlichungstag der Anmeldung: 02.01.2002
(73) Patentinhaber: Goldschmidt AG, 45127 Essen (DE)
(72) Erfinder: Hoffmann, Ralf, Dr., 48308 Senden (DE); Schlöns, Hans-Heinrich, 45289 Essen (DE)

(56) Entgegenhaltungen:
- CH-A- 463 786
- GB-A- 801 070
- GB-A- 938 398
- CHEMICAL ABSTRACTS, vol. 117, no. 10, 7. September 1992 (1992-09-07) Columbus, Ohio, US; abstract no. 91023h, XP000400927 & JP 04 093314 A (KEIICHI N. ET AL) 8. August 1992 (1992-08-08)

## Beschreibung

Die Erfindung betrifft die kombinierte Verwendung von Metallsalzen der Ricinolsäure mit reaktiven Aminen bei der Herstellung von Polyurethanschäumen (PUR-Schäume).

Polyurethanschaumstoffe finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet) und Hartschäume, sowie Schäume deren Eigenschaften zwischen diesen Klassifizierungen liegen, wie beispielsweise halbharte Systeme, stellt die Automobilindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme verwendet.

In den letzten Jahren haben sich die Anforderungen der Automobilhersteller an ihre Schaumstoffzulieferer, insbesondere bezüglich einer Emissionsspezifikation, deutlich verschärft. Wurde in der Vergangenheit der Schwerpunkt alleine auf das Foggingverhalten der Schäume gelegt (DIN 75 201, Bestimmung des Foggingverhaltens von Werkstoffen der Kfz-Innenausstattung), ist heute außerdem der Gehalt an flüchtigen organischen Bestandteilen (VOC = volatile organic compounds) Gegenstand analytischer Bestimmungen (Volkswagen Zentralnorm 55 031, Daimler Chrysler PB VWT 709). Die Daimler-Chrysler-Methode verlangt neben der quantitativen Bestimmung des VOC- und Fogwertes die Zuordnung der Emissionen zu einzelnen chemischen Verbindungen.

Technischer Stand ist die Verwendung von Zinnoctoat bei der Herstellung von PUR-Weichschäumen auf Basis von Polyetherolen (George Woods, The ICI Polyurethanes Book, Verlag Wiley, S. 45 and Ron Herrington, Flexible Polyurethane Foams, Dow Chemical, S. 2.30). Das Zinnoctoat dient als Katalysator der Reaktion von Isocyanaten mit Polyolen (auch als Gelkatalysator bezeichnet) über einen komplexen Übergangszustand. Während der Herstellung des Schaumes hydrolysiert das Zinnoctoat und setzt die 2-Ethylhexansäure frei. Diese Zersetzung ist erwünscht, weil auf diese Weise die Rückreaktion der Urethanbindung zu den Edukten unterbunden ist. Für die Ausbildung des erwünschten Ligandenkomplexes ist die Ethylverzweigung des Octoates von entscheidender Bedeutung.

Einen breiten Umfang in der Patentliteratur nimmt die Verwendung von Zinkstearat als internes Trennmittel zur Herstellung von RIM-Schäumen (realtion injection moulding = Reaktionsspritzguß) ein. Beispielhaft seien die Patentschriften US-A 5,008,033; US-A-5,212,209; EP-A 0 490 342; WO 96/22182 genannt. In diesen Schriften wird die Verwendung von Metallsalzen höherer Carbonsäuren, vorzugsweise Zinkstearat, und deren Zusätze zur Kompatibilisierung im RIM-Gemisch beansprucht.

An dieser Stelle sei darauf hingewiesen, dass Polyurethan-RIM-Systeme deutliche Unterschiede gegenüber den erfindungsgemäßen Schaumsystemen aufweisen. Bei RIM-Systemen handelt es sich um kompakte Formköper oder mikrozellulare Systeme, keinesfalls jedoch um offenporige Schäume. Dementsprechend unterscheiden sich die Dichten beider Systeme drastisch. RIM-Formkörper weisen Dichten von >700 kg/m³, die erfindungsgemäßen PUR-Schäume haben Dichten von <100 kg/m³, insbesondere <50 kg/m³. Die Katalyse von RIM-Systemen ist deutlich anders. Anstelle von Zinnoctoat wird typischerweise Dibutylzinnlaurat in RIM-Systemen eingesetzt. Wie die Vergleichsbeispiele zeigen, bieten weder Zinkstearat (Zinksalz der Octadecansäure), noch Zinkoleat (Zinksalz der 9-Octadecensäure), noch Zink-12-hydroxylstearat einen wesentlichen Vorteil.

Ein konventioneller Weichschaum mit der Dichte 25 kg/m³ weist typischerweise folgende VOC-Emissionen auf: Gesamtwert 800 ppm, aufgeschlüsselt in 550 ppm BHT (Bis-2,6-tert.-butyl-4-hydroxytoluol), 200 ppm 2-Ethylhexansäure, 20 ppm tertiäre Amine, 10 ppm Siloxane, 20 ppm unbestimmte Verbindungen. Selbstverständlich sind die Emissionen stark von der jeweiligen Rezeptur abhängig, jedoch sind stets BHT und 2-Ethylhexansäure die Hauptkomponenten. Das BHT stammt typischerweise aus dem Polyol und Isocyanat. Die Hersteller dieser Rohstoffe bieten seit kurzem BHT-freie Qualitäten ihrer Produkte an. Unter Verwendung dieser Rohstoffe können Schäume mit einem VOC-Wert von etwa 250 ppm hergestellt werden.

Da Kfz-Hersteller inzwischen einen VOC-Richtwert von 100 ppm festgelegt haben, der in den nächsten Jahren erreicht werden soll, besteht dringende technische Notwendigkeit, die 2-Ethylhexansäure-Emission sowie die Aminemission zu reduzieren.

2-Ethylhexansäure ist ein Zersetzungsprodukt des Zinnoctoats, welches üblicherweise als Katalysator der Polyurethanreaktion wirkt. Ohne technische verfügbare Alternative zum Zinnoctoat, die dessen Anwendungsspektrum abdeckt, lässt sich der VOC-Wert nach dem Stand der Technik nicht deutlich reduzieren, auf keinen Fall auf einen Wert < 100 ppm.

Die Aminemission aus Schaumstoffen stellt das zweite Problem dar, welches zur Zeit noch nicht zufriedenstellend gelöst werden kann. Es sind mehrere Wege denkbar, die Amin-Emission zu reduzieren. So können hochmolekulare Amine verwendet werden. Aufgrund des hohen MW sind diese Verbindungen nicht mehr flüchtig und emittieren nicht aus dem Schaum. Gleichzeitig ist aus dem selben Grund jedoch die Beweglichkeit der Moleküle eingeschränkt, so dass die katalytische Wirkung deutlich verringert ist. Auch stellt die verlangsamte Hautaushärtung ein weiteres Problem dar. Die andere Alternative stellen reaktive Amine dar, die mit OH oder NH funktionellen reaktiven Strukturen versehen sind, und so in die PU Matrix einreagieren. Durch die chemische Bindung zum Polymer ist auch hier eine Emission verhindert. Ein Nachteil der auf dem Markt erhältlichen Verbindungen stellt die sogenannte Rekatalyse dar. Katalysatoren beschleunigen durch das Verringern der Aktivierungsbarriere nicht nur die Hin- sondern auch die Rückreaktion. Schäume die mit reaktiven Aminen hergestellt wurden, zeigen somit ein deutlich verschlechtertes Alterungsverhalten - insbesondere im Feuchtalterungstest (Humid Ageing).

Im Stand der Technik ist keine Möglichkeit beschrieben, diese Rekatalyse zu verhindern.

Die Aufgabe der vorliegenden Erfindung besteht in der Überwindung der vorgenannten Probleme.

In einer ersten Ausführungsform der Erfindung werden die vorgenannten Probleme gelöst durch die Verwendung von Metallsalzen der Ricinolsäure oder deren Lösungen in wässrigen oder organischen Lösungsmitteln zur Herstellung von Polyurethanschäumen in Kombination mit reaktivem Amin der allgemeinen Formel (I) 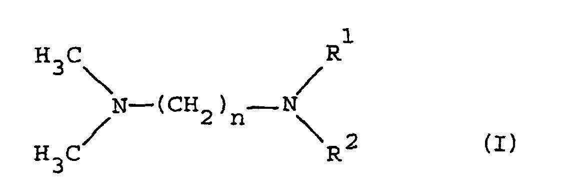 wobei
- n: = 1 bis 4,
- R¹ und R²: =(CH₂-CH₂-O)ₓH oder
= (CH₂-CH(CH₃)-O)ₓH oder
= (CH₂-CH(CH₂-CH₃)-O)ₓH,
- x: = 0,1,2,3 oder 4,
mit der Maßgabe ist, dass im Molekül mindestens ein x > 0 ist.

Durch den Zusatz der Metallsalze der Ricinolsäure lassen sich Schaumstoffe mit geringeren Emissionswerten, besseren Flammschutzeigenschaften und einem geringeren Geruch herstellen. Zudem wird die Aushärtung der Schaumoberfläche beschleunigt. Diese Vorteile lassen sich erzielen, ohne dass sich die sonstigen physikalischen Eigenschaften, wie beispielsweise Dichte, Härte, Rückprallelastizität oder Stauchhärte, ändern.

In besonderer Weise sind Ricinoleate der Metalle aus der 1., 2. oder 4. Hauptgruppe sowie der 1., 2. oder 8. Nebengruppe des Periodensystems geeignet. Besonders bevorzugt im Sinne der vorliegenden Erfindung sind Zink und/oder Zinn, so dass auch Zinn-freie Schäume herstellbar sind.

Von den Kationen ist Zinn, insbesondere in zweiwertiger Form, besonders bevorzugt, da Zinnricinoleat bei Raumtemperatur in flüssiger Form vorliegt.

Das ebenfalls bevorzugte Zinksalz der Ricinolsäure kann in der sogenannten Aktivatorlösung, bestehend aus Wasser, tertiärem Amin, Siliconstabilisator und gegebenenfalls Emulgator, vorgelöst werden. Die direkte Dosierung des festen Ricinoleats in die Verschäumungskomponenten führt zu einem Schaum mit unregelmäßiger Zellstruktur. Da viele Verschäumer nur über eine direkte Dosierung verfügen, stellt ein Produkt, in welchem das Zinksalz der Ricinolsäure in gelöster Form, bzw. das Zinnsalz in flüssiger Form vorliegt, eine erheblich Verbesserung dar. Dabei sind wasserfreie Lösungen vorzuziehen, weil ansonsten das Wasser aus dem Lösungsmittel mit den Isocyanaten reagiert und deshalb in die Formulierung einberechnet werden muss. Außerdem sind einige Übergangsmetallsalze nur bedingt hydrolysestabil.

Als wasserfreie Lösungsmittel des Zinksalzes der Ricinolsäure sind grundsätzlich die Kombinationen von 5 bis 50 Gew.-%, bezogen auf die Masse von Lösungsmitteln und Salz, eines ethoxylierten Fettalkohols mit gerader und verzweigter Alkylkette und einer Kohlenstoffzahl zwischen 10 und 18 mit weniger als 30 Ethylenoxideinheiten mit 5 bis 30 Gew.-% eines tertiären Amins geeignet. In derartig charakterisierten Lösungsmitteln können bis zu 60 Gew.-% des Metallsalzes der Ricinolsäure klar gelöst werden.

Bevorzugt ist eine Kombination von 5 bis 32 Gew.-% eines Fettalkohols mit gerader und verzweigter Alkylkette und einer Kohlenstoffzahl zwischen 10 und 18 mit weniger als 20 Ethylenoxideinheiten mit 5 bis 30 Gew.-% des reaktiven Amins.

Eine derartige Lösung ist beispielsweise in DE-A-40 14 055 als Mittel mit desodorierender Wirkung beschrieben. Als Anwendungen werden Kosmetik, Waschen und Reinigen und Geruchsabsorption in technischen Anwendungen beschrieben. Die erfindungsgemäße Verwendung im PUR-Schaum unterscheidet sich von diesen Anwendungen in drei grundliegenden Punkten.

Erstens wird das Zinksalz der Ricinolsäure bei der Herstellung von PUR-Schäumen sehr reaktiven Reaktionspartnern, wie Isocyanaten, ausgesetzt. Dabei erwartet der Fachmann eine Reaktion mit der Hydroxylfunktion des Ricinoleats und damit das Einbinden in die Polymermatrix. Zweitens sind die Auswirkungen des Zinkricinoleats auf die sorgsam abgestimmte Katalyse des PUR-Schaums, und damit die Möglichkeit, einen physikalisch gleichen Schaum herzustellen, nicht vorherzusehen. Eine Beeinflussung der Katalyse durch den Aminoalkohol, welcher als Lösungsmittelkomponente dient, ist ebenfalls nicht vorherzusehen. Und drittens entsteht die zu bindende Substanz 2-Ethylhexansäure erst während der Schaumherstellung aus dem Zinnoctoat. Das bedeutet, dass innerhalb der kurzen PUR Reaktion, welche typischerweise etwa 100 Sek. dauert, alle Transportvorgänge, die die Begegnung der Reaktionspartner 2-Ethylhexansäure und Metallsalz der Ricinolsäure betreffen, abgeschlossen sein müssen, bevor die Polymermatrix erstarrt.

Eine bevorzugte Ausführungsform der vorliegenden Erfindung umfaßt die Verwendung eines spezifischen Zinnkatalysators in Kombination mit reaktivem Amin. Der Zinnkatalysator katalysiert vermehrt die sogenannte Gelreaktion (Urethanbildung) im Herstellungsprozess für PU-Schaum. Der Aminkatalysator, gegebenenfalls in Kombination mit weiteren Aminen, ist dagegen vermehrt zur Beschleunigung der Treibreaktion (letztlich Harnstoffbildung) verantwortlich. In Systemen des Standes der Technik wird eine Mischung beider Katalysatoren eingesetzt, die zu einer sinnvollen Balance beider Teilreaktionen führt. Die Aminemission lässt sich beispielsweise nicht nur durch die geringere Verwendung des Aminkatalysators verringern, da dadurch die beiden Teilreaktionen aus dem Gleichgewicht laufen. Ebensolches gilt für die Verwendung von Zinnkatalysatoren für die Gelreaktion.

Die erfindungsgemäße Kombination bietet folgende Vorteile: der Metallsalzkatalysator enthält keine leichtflüchtige Säure ähnlich dem Fall des Zinnoctoates. Die verwendete Säure besitzt ein deutlich höheres MW gegenüber 2-Ethylhexansäure. Zusätzlich trägt die Säure noch eine reaktive OH Funktionalität, die dazu führt, dass das Molekül in die Polymermatrix eingebaut wird und nicht mehr emittieren kann.

Ein weiterer wesentlicher Vorteil besteht in der überraschend deutlich veränderten Balance zwischen der Katalyse der beiden Teilreaktionen. Durch die vermehrte Beschleunigung der Treibreaktion kann die Menge des einzusetzenden Aminkatalysators gegenüber dem Stand der Technik deutlich reduziert werden. Unter Verwendung eines reaktiven Amins mit zwei reaktiven Zentren wird die Neigung zur Emission vollständig unterdrückt. Insbesondere überraschend ist der Effekt, dass durch die Kombination der genannten Katalysatoren keine Verschlechterung hinsichtlich der Feuchtealterung beobachtet wurde. Die mit dieser Kombination hergestellten Schäume unterscheiden sich bzgl. ihrer Alterungseigenschaften nicht von heutigen Schäumen, produziert mit Zinnoctoat und flüchtigen Aminen.

Besonders bevorzugt im Sinne der vorliegenden Erfindung sind die reaktiven Amine in Kombination mit Metallsalzen der Ricinolsäure oder deren Lösungen in wässrigen oder organischen Lösungsmitteln, die bei der Herstellung von Polyurethanschaum eingesetzt werden können, derart ausgewählt, dass n in der allgemeinen Formel (I) = 3 ist. In gleicher Weise ist es besonders bevorzugt im Sinne der vorliegenden Erfindung, wenn x in der allgemeinen Formel (I) = 1 ist.

Insbesondere bevorzugt im Sinne der vorliegenden Erfindung wird als reaktives Amin ein N,N-dimethyl-N',N'-2-hydroxy(propyl)-1,3-propylendiamin eingesetzt.

Die Reaktion 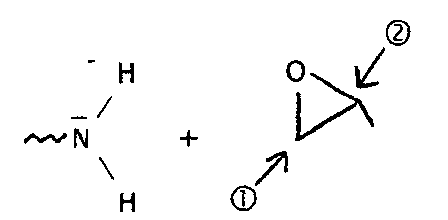 verläuft hauptsächlich an der sterisch weniger gehinderten Seite des Alkylenoxids (zu etwa 90 %). Es findet sich auch stets ein Reaktionsprodukt, welches durch Angriff an "2" gebildet wird (zu etwa 10 %).

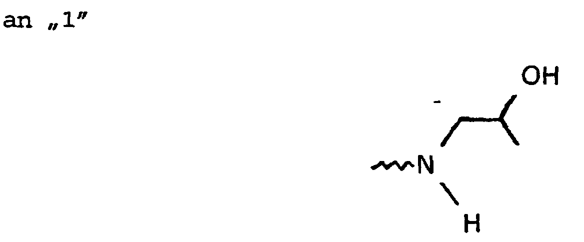

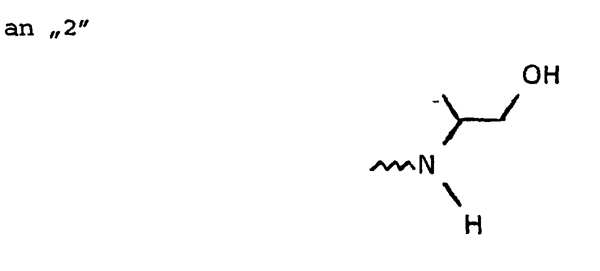

### Beispiele

### Herstellung der Polyurethanschäume

Bei der Verschäumung wurden 300 g Polyol eingesetzt; die anderen Formulierungsbestandteile wurden entsprechend umgerechnet. Dabei bedeutete beispielsweise 1,0 Teile einer Komponente 1 g dieser Substanz je 100 g Polyol.

Zur Verschäumung wurden das Polyol, Wasser, Amin, die Zinnverbindung und Siliconstabilisator unter Rühren gut vermischt. Nach Zugabe des Isocyanats wurde mit einem Rührer 7 Sek. bei 3000 U/Min. gerührt und das Gemisch in einen mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

### Anwendungstechnische Tests

### Physikalische Eigenschaften der Schäume

Die hergestellten Schäume wurden anhand folgender physikalischer Eigenschaften beurteilt:
a) Rücksacken des Schaumstoffes nach dem Ende der Steigphase (= Rückfall)
b) Schaumhöhe
c) Raumgewicht (RG)
d) Die Luftdurchlässigkeit des Schaumes wurde durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen.
e) Stauchhärte CLD, 40 %
f) Druckverformungsrest bei Kompression um 90 % für 22 h bei 70 °C
g) Rückprallelastizität (Ball rebound test)

### Messung der Emissionen

Die 2-Ethylhexansäure-Emission wurde in Anlehnung an die Daimler-Chrysler-Prüfvorschrift PB VWT 709 bestimmt.

Im folgenden wird die Durchführung der Thermodesorption mit anschließender Gaschromatograhie/Massenspektrometrie-Kopplung (GC/MS) beschrieben.

### a) Meßtechnik:

Die Thermodesorption wurde mit einem Thermodesorber "TDS2" mit Probenwechsler der Fa. Gerstel, Mülheim, in Verbindung mit einem Hewlett Packard HP6890/HP5973 GC/MSD-System durchgeführt.

### b) Meßbedingungen:

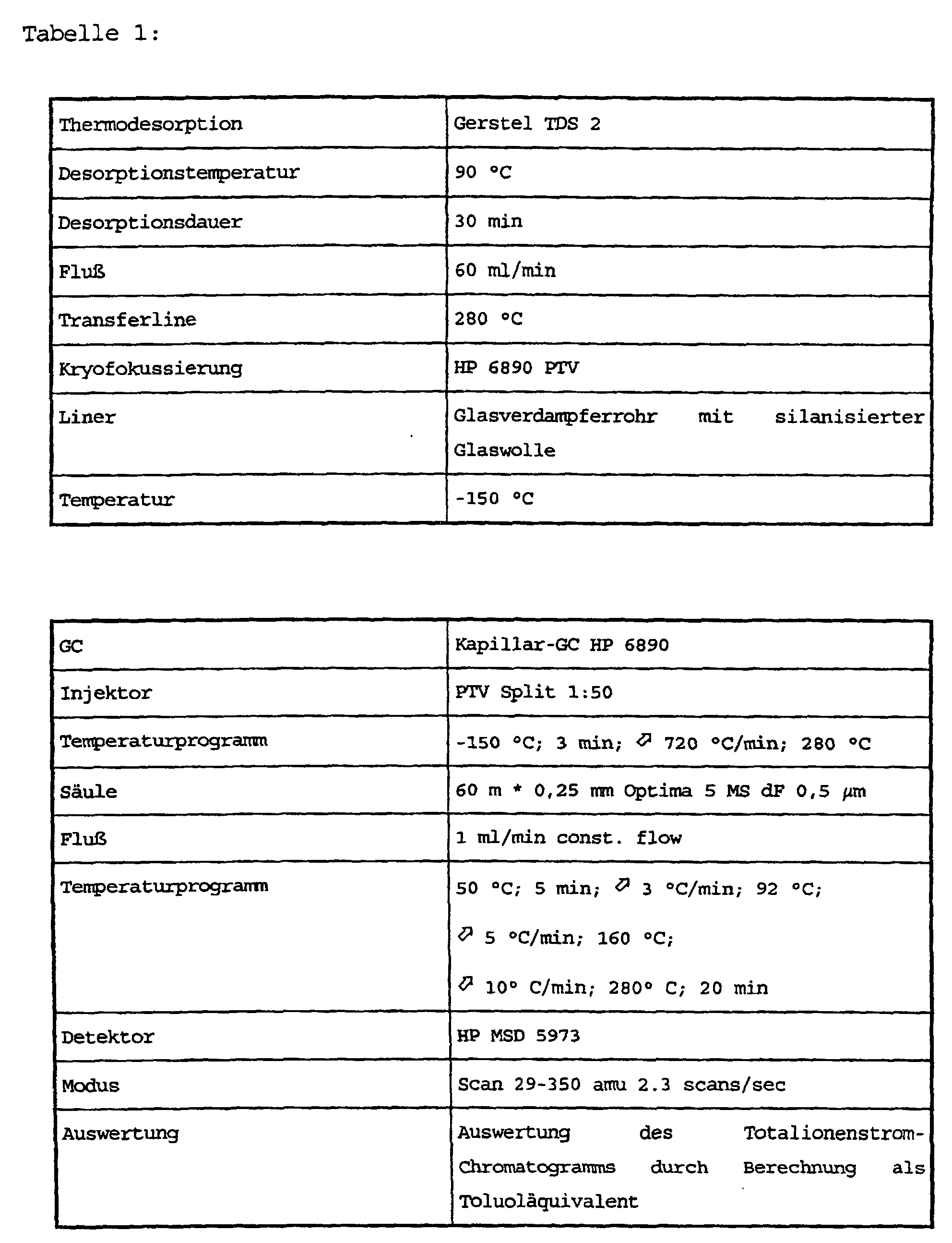

### c) Kalibration

Zur Kalibration wurde 1 µl eines Gemisches aus Toluol und Hexadecan in Pentan (je 0,6 mg/ml) auf ein gereinigtes, mit Tenax® TA (mesh 35/60) gefülltes Adsorptionsröhrchen gegeben und vermessen (Desorption 5 min; 280 °C).

### d) Probenvorbereitung

10 mg Schaumstoff wurden in drei Teilproben in ein Thermodesorptionsröhrchen gesteckt. Dabei wurde darauf geachtet, dass der Schaum nicht komprimiert wird.

In zwei Rezepturen basierend auf 3,0 und 5,0 Teilen Wasser wurde das unterschiedliche Verhalten von Zinnoctoat und Zinnricinoleat miteinander verglichen. Es sollte versucht werden, die durch Zinnoctoat vorgegebene Steigzeit durch den ausschließlichen Einsatz von Zinnricinoleat zu kopieren. Dies wurde sowohl ohne Aminreduzierung als auch in einem weiteren Schritt unter Beibehaltung der entsprechenden Steigzeit und Aminreduzierung bei gleichzeitiger Erhöhung an Zinnricinoleat realisiert.

### Verschäumungsergebnisse

### Beispiel 1:

| | |
|---|---|
| 100 | Teile Polyol, Voranol® CP 3322 (Dow Chemical) |
| 5,0 | Teile Wasser |
| 0,80 | Teile Schaumstabilisator, TEGOSTAB® BF 2370 (Goldschmidt) |
| 58,4 | Teile Isocyanat, (Toluylendiisocyanat T80) |
| | (80 % 2,4 - Isomeres, 20 % |
| | 2,6 - Isomeres) |

Die nachfolgende Tabelle gibt die Art des Katalysators und das Verschäumungsergebnis wieder.

**Tabelle 2:**

| **Zinnkatalysator** | **Aminkatalysator** | **Steigzeit** **[s]** | **Raumgewicht** **[kg/m**^{**3**}**]** | **Porosität*** | **Stauchhärte CLD 40 Kompression** **[kPa]** |
|---|---|---|---|---|---|
| 0,18 Teile KOSMOS® 29** | 0,15 Teile PE 4360*** | 93 | 20,7 | 18 | 3,2 |
| 0,24 Teile KOSMOS® 29** | 0,15 Teile PE 4360*** | 83 | 20,2 | 52 | 3,7 |
| 0,30 Teile KOSMOS® 29** | 0,15 Teile PE 4360*** | 74 | 19,7 | > 179 | 4,1 |
| 0,36 Teile Zinnricinoleat | 0,15 Teile PE 4360*** | 96 | 20,5 | 11 | 2,7 |
| 0,48 Teile Zinnricinoleat | 0,15 Teile PE 4360*** | 82 | 20,1 | 12 | 3,1 |
| 0,60 Teile Zinnricinoleat | 0,15 Teile PE 4360*** | 73 | 20,0 | 15 | 3,2 |
| 0,40 Teile Zinnricinoleat | 0,05 Teile PE 4360*** | 96 | 20,4 | 9 | 3,2 |
| 0,53 Teile Zinnricinoleat | 0,05 Teile PE 4360*** | 83 | 20,2 | 14 | 3,5 |
| 0,66 Teile Zinnricinoleat | 0,05 Teile PE 4360*** | 75 | 19,7 | > 132 | 3,9 |

| | | | | | |
|---|---|---|---|---|---|
| * Luftdurchlässigkeit ist angegeben in mm Staudruck Wassersäule, welcher sich aufbaut, wenn ein konstanter Luftstrom durch den Schaum geleitet wird. Je höher der angegebene Wert, desto geschlossenzelliger ist der Schaum und umgekehrt. | | | | | |
| ** (Zinnoctoat) | | | | | |
| *** (N,N-dimethyl-N',N'-2-hydroxy(propyl)-1,3-propylendiamin) | | | | | |

**Tabelle 3:**

| **Zinnkatalysator** | **Zugfestigkeit** **[kPa]** | **Bruchdehnung [%]** | **Druckverformungs rest90 %, 22 Std., 70 °C [%]** | **Rückprallelastizität** **[%]** |
|---|---|---|---|---|
| 0,18 Teile KOSMOS® 29** | 96 | 137 | 9 | 42 |
| 0,24 Teile KOSMOS® 29** | 118 | 199 | 48 | 35 |
| 0,30 Teile KOSMOS® 29** | 115 | 187 | > 85 | 23 |
| 0,36 Teile Zinnricinoleat | 107 | 202 | 8 | 44 |
| 0,48 Teile Zinnricinoleat | 106 | 206 | 9 | 39 |
| 0,60 Teile Zinnricinoleat | 114 | 206 | 52 | 37 |
| 0,40 Teile Zinnricinoleat | 105 | 189 | 9 | 41 |
| 0,53 Teile Zinnricinoleat | 119 | 213 | 45 | 37 |
| 0,66 Teile Zinnricinoleat | 117 | 206 | > 85 | 19 |

| | | | | |
|---|---|---|---|---|
| ** vgl. Tabelle 2 | | | | |

Unter Anwendung der 5,0 Teile Wasserrezeptur wurde deutlich, dass bei einer 100%igen Erhöhung der Menge von Zinnricinoleat im Vergleich zu Zinnoctoat unter Beibehaltung der Aminkonzentration vergleichbare Steigzeiten erhalten wurden. Während Raumgewicht, Zugfestigkeit, Bruchdehnung, Druckverformungsrest und Rückprallelastizität unter Berücksichtigung der allgemeinen Schwankungen sowie der teilweise zu geschlossenen Schäume als weitgehend vergleichbar angesehen werden konnten, ergaben sich erhebliche Abweichungen bei der Porosität und der Stauchhärte. Zinnricinoleat führte in höherer Konzentration zu einer geringeren Geschlossenzelligkeit als Zinnoctoat. Die durch Zinnricinoleat erhaltenen weicheren Schäume unterstrichen das geringere Potential, die Urethanreaktion zu katalysieren.

In einem weiteren Schritt wurde die Aminkonzentration von 0,15 auf 0,05 Teile abgesenkt und der Gehalt an Zinnricinoleat ermittelt, welcher zu einer vergleichbaren Steigzeit gegenüber den zuvor durchgeführten Versuchen gelangt. Eine weitere Steigerung um 20 %, also insgesamt 120 % über der Konzentration von Zinnoctoat, führte wiederum zu vergleichbaren Steigzeiten. Nun konnten in allen Belangen vergleichbare physikalische Eigenschaften zwischen Zinnoctoat und Zinnricinoleat erhalten werden.

### Beispiel 2:

| Rezeptur: | |
|---|---|
| 100 | Teile Polyol, Voranol® CP 3322 (Dow Chemical) |
| 3,0 | Teile Wasser |
| 0,6 | Teile Schaumstabilisator, TEGOSTAB® BF 2370 (Goldschmidt) |
| 38,1 | Teile Isocyanat, (Toluylendiisocyanat T80) (80 % 2,4 - Isomeres, 20 % 2,6 - Isomeres) |

**Tabelle 4:**

| **Zinnkatalysator** | **Aminkatalysator** | **Steigzeit** **[s]** | **Raumgewicht** **[kg/m**^{**3**}**]** | **Porosität*** | **Stauchhärte CLD 40 Kompression** **[kPa]** |
|---|---|---|---|---|---|
| 0,15 Teile KOSMOS® 29** | 0,25 Teile PE 4360*** | 167 | 31,4 | 14 | 3,3 |
| 0,21 Teile KOSMOS® 29** | 0,25 Teile PE 4360*** | 136 | 31,1 | 52 | 4,1 |
| 0,27 Teile KOSMOS® 29** | 0,25 Teile PE 4360*** | 129 | 30,4 | > 300 | 4,5 |
| 0,30 Teile Zinnricinoleat | 0,25 Teile PE 4360*** | 167 | 32,2 | 11 | 3,2 |
| 0,45 Teile Zinnricinoleat | 0,25 Teile PE 4360*** | 137 | 31,0 | 25 | 3,2 |
| 0,50 Teile zinnricinoleat | 0,25 Teile PE 4360*** | 127 | 30,6 | 28 | 3,6 |
| 0,38 Teile Zinnricinoleat | 0,10 Teile PE 4360*** | 168 | 32,1 | 20 | 3,5 |
| 0,48 Teile Zinnricinoleat | 0,10 Teile PE 4360*** | 134 | 31,1 | 36 | 3,9 |
| 0,55 Teile Zinnricinoleat | 0,10 Teile PE 4360*** | 127 | 30,9 | 53 | 4,0 |

| | | | | | |
|---|---|---|---|---|---|
| * Luftdurchlässigkeit ist angegeben in mm Staudruck Wassersäule, welcher sich aufbaut, wenn ein konstanter Luftstrom durch den Schaum geleitet wird. Je höher der angegebene Wert, desto geschlossenzelliger ist der Schaum und umgekehrt. | | | | | |
| ** (Zinnoctoat) | | | | | |
| *** (N,N-dimethyl-N',N'-2-hydroxy(propyl)-1,3-propylendiamin) | | | | | |

**Tabelle 5:**

| **Zinnkatalysator** | **Zugfestigkeit** **[kPa]** | **Bruchdehnung [%]** | **Druckverformungsrest 90 %, 22 Std., 70 °C** **[%]** | **Rückprallelastizität** **[%]** |
|---|---|---|---|---|
| 0,15 Teile KOSMOS® 29** | 99 | 175 | 6 | 49 |
| 0,21 Teile KOSMOS® 29** | 106 | 183 | 7 | 48 |
| 0,27 Teile KOSMOS® 29** | 99 | 163 | 21 | 36 |
| 0,30 Teile Zinnricinoleat | 64 | 117 | 6 | 48 |
| 0,45 Teile Zinnricinoleat | 95 | 191 | 6 | 48 |
| 0,50 Teile Zinnricinoleat | 89 | 180 | 5 | 48 |
| 0,38 Teile Zinnricinoleat | 86 | 166 | 5 | 49 |
| 0,48 Teile Zinnricinoleat | 93 | 174 | 4 | 48 |
| 0,55 Teile Zinnricinoleat | 95 | 180 | 4 | 47 |

| | | | | |
|---|---|---|---|---|
| ** vgl. Tabelle 4 | | | | |

Entsprechend der 5,0 Teile Wasserrezeptur wurde auf Basis der 3,0 Teile Wasserrezeptur ebenfalls versucht, gegenüber Zinnoctoat vergleichbare Steigzeiten zu erzielen. Mit etwas größeren Abweichungen beim Mehreinsatz von Zinnricinoleat (diesmal 100 ± 15 % bzw. 125 ± 25 % bei Aminreduzierung) konnten gegenüber Zinnoctoat vergleichbare Steigzeiten erzielt werden. Das Gesamteigenschaftsbild dieser Schäume entsprach in jeder Hinsicht der aus der 5,0 Teile Wasserrezeptur. Die geringere Vernetzungsaktivität wird bei diesen Schäumen durch Seitenrisse im unteren Konzentrationsbereich von Zinnricinoleat repräsentiert. Unter Aminreduzierung von 0,25 auf 0,10 (eine weitere Reduzierung ist hier sicherlich noch angezeigt) werden ab 0,48 Teilen Zinnricinoleat einwandfreie Schaumergebnisse erhalten.

### Stöchiometrische Betrachtungen

**Tabelle 6:**

| | Zinnoctoat | Zinnricinoleat |
|---|---|---|
| Molekulargewicht säure | 144,2 | 298,45 |
| Molekulargewicht Zinnsalz | 405,1 | 713,6 |
| % Zinn⁺⁺ | 29,3 | 16,6 |

Daraus folgte ein Faktor zwischen diesen beiden Produkten von 1,76. D. h., um eine vergleichbare Menge an Zinn⁺⁺ in die Rezeptur einzubringen, musste die 1,76fache Menge an Zinnricinoleat gegenüber Zinnoctoat eingesetzt werden. Aufgrund der Verschiebung zwischen Treib- und Gelreaktion reichte diese Menge jedoch nicht aus. Je nach Rezeptur und vorgelegter Menge an Zinnoctoat betrug der anwendungstechnische Faktor zwischen 1,85 und 2,15. Wurde durch Zinnricinoleat ein Teil des Amins kompensiert, so stieg der Faktor auf 2,2 bis 2,5.

Zinnricinoleat wurde mit Zinnoctoat verglichen. Es wird deutlich, dass bei Zinnricinoleat das Verhältnis zwischen treib- und gelkatalytischer Eigenschaft deutlich gegenüber Zinnoctoat zur Treibkatalyse hin verschoben ist. Dieses Eigenschaftsbild kann durch Reduzierung der korrespondierenden Aminkonzentration kompensiert werden.

### Beispiel 3:

Das in Vorversuchen mit positivem Eigenschaftsbild charakterisierte propoxylierte DMAPA (PE 4360) sollte auf sein Verhalten, re-katalytische Prozesse zu forcieren, geprüft und mit anderen Produkten verglichen werden. Hierzu wurde eine als besonders kritische Rezeptur höheren Raumgewichtes gewählt, wobei die Einsatzkonzentration aller geprüften Amine konstant bei 0,25 Teilen gehalten wurde. Ergänzend hierzu wurde in die Untersuchung eine wasserfreie flüssige Zubereitung von Zinkricinoleat gelöst in einem ethoxylierten Fettalkohol und einem tertiären Amin mit einbezogen. Die beiden nachfolgenden Tabellen geben Aufschluss sowohl über das unterschiedliche katalytische Verhalten der ausgewählten Produkte sowie über die physikalischen Schaumeigenschaften gemessen sowohl vor als auch nach Temperatur- und Hydrolysealterung.

| Rezeptur | |
|---|---|
| 100 | Teile Polyol, Voranol® CP 3322(Dow Chemical) |
| 2,4 | Teile Wasser |
| 1,0 | Teile Schaumstabilisator, TEGOSTAB® B 8002 (Goldschmidt) |
| 0,18 | Teile Zinnoctoat, KOSMOS® 29 |
| 0,25 | Teile Aminkatalysator, N,N-dimethyl-N',N'-2-hydroxy(propyl)-1,3-propylendiamin |
| 32,0 | Teile Isocyanat, (Toluylendiisocyanat T80) (80 % 2,4 - Isomeres, 20 % 2,6 - Isomeres) |

**Tabelle 7:**

| **Aminkatalysator** | **Steigzeit** **[s]** | **Raumgewicht** **[kg/cm**^{**3**}**]** | **Porosität*** | **CLD, 40 % Kompression [kPa] (ohne Vorbehandlung)** | **CLD, 40 % Kompression [kPa] nach 5 Std. 120 °C, 100 % rel. LF** | **CLD, 40 % Kompression [kPa] nach 2 Std. 180 °C** | **CLD, 40 % Kompression [kPa] nach 2 Std. 200 °C** |
|---|---|---|---|---|---|---|---|
| TEGOAMIN® DMEA¹⁾ | 194 | 39,6 | 13 | 3,8 | 3,5 | 2,6 | 3,2 |
| TEGOAMIN® B 75²⁾ | 141 | 38,6 | 13 | 3,4 | 2,9 | 2,6 | 2,9 |
| 3) | 176 | 38,4 | 14 | 3,1 | 2,7 | total zerstört | total zerstört |
| PE 4360⁴⁾ | 202 | 40,0 | 60 | 3,7 | 3,2 | 2,8 | 3,0 |
| TEGOAMIN® DMEE⁵⁾ | 177 | 38,8 | 11 | 3,2 | 2,9 | total zerstört | total zerstört |
| 6) | 144 | 38,4 | 9 | 3,2 | 2,8 | 2,3 | total zerstört |
| API⁷⁾ | 149 | 39,6 | 31 | 3,7 | 3,3 | 2,5 | 2,0 |

| | | | | | | | |
|---|---|---|---|---|---|---|---|
| 1) Tegoamin® DMEA = Dimethylethanolamin | | | | | | | |
| 2) Tegoamin® B75 = Standardkatalysator (Gemisch aus verschiedenen Aminen) | | | | | | | |
| 3) = N,N-Dimethylaminoethyl-N,N-methylethanolamin | | | | | | | |
| 4) PE 4360 = N,N-dimethyl-N',N'-2-hydroxy(propyl)-1,3-propylendiamin | | | | | | | |
| 5) Tegoamin® DMEE = Dimethylaminoethoxyethanol | | | | | | | |
| 6) = N,N-bis-(3-dimethylaminopropyl)-N-isopropanolamin | | | | | | | |
| 7) API = Aminopropylimidazol | | | | | | | |
| * Luftdurchlässigkeit ist angegeben in mm Staudruck Wassersäule, welcher sich aufbaut, wenn ein konstanter Luftstrom durch den Schaum geleitet wird. Je höher der angegebene Wert, desto geschlossenzelliger ist der Schaum und umgekehrt. | | | | | | | |

**Tabelle 8:**

| Aminkatalysator | Druckverformungsrest 22 Std., 90 % Kompression, 70 °C [%] | | | |
|---|---|---|---|---|
| | ohne Vorbehandlung | nach 5 Std. 120 °C, 100 % rel. LF | nach 2 Std. 180 °C | nach 2 Std. 200 °C |
| TEGOAMIN® DMEA¹⁾ | 3 | 6 | 16 | 5 |
| TEGOAMIN® B 75²⁾ | 3 | 6 | 13 | 5 |
| 3) | > 85 | 27 | total zerstört | total zerstört |
| PE 4360⁴⁾ | 4 | 7 | 8,0 | 5,0 |
| TEGOAMIN® DMEE⁵⁾ | 4 | 6 | total zerstört | total zerstört |
| 6) | 4 | 6 | 12 | total zerstört |
| API⁷⁾ | 4 | 7 | 6 | 7 |

| | | | | |
|---|---|---|---|---|
| 1)-7) vgl. Tabelle 7 | | | | |

Die Stauchhärte, gemessen bei 40 % Kompression, welche durch die vier Spalten nach der Porosität repräsentiert wurde, zeigte, dass eine Temperaturalterung hier im Bereich zwischen 180 und 200 °C die Re-Katalyse in stärkerem Maße beeinflusst als eine Hydrolysealterung 5 Std. bei 120 °C bei 100 % relativer Luftfeuchtigkeit. Erwartungsgemäß wurden Schäume auf Basis des Amins 3) und DMEE total unter Hitzeinwirkung zerstört. Auch Amin 6) war zumindest bei einer Temperatur von 200 °C aktiv am re-katalytischen Prozess beteiligt. Aminopropylimidazol (API) ließ sich nicht eindeutig zuordnen, jedoch bestanden bei diesem Produkt Zweifel, ob es unter extremen Bedingungen nicht ebenfalls eine Auswirkung auf die Veränderung der Stauchhärte hatte.

TEGOAMIN® DMEA, TEGOAMIN® B 75 und PE 4360 zeigen absolut vergleichbare Werte. Das heißt, alle drei Produkte trugen in geringerem Maße jedoch vergleichbar zur Re-Katalyse der entsprechenden Schäume bei.

Bei der Betrachtung des Druckverformungsrestes zeigten sich gegenüber der Stauchhärte vergleichbare Eigenschaftsbilder. Allerdings fällt Amin 3) hier schon durch seine zerstörerische Eigenschaft bei der Bestimmung des Druckverformungsrestes ohne Temperaturalterung auf. Erfreulich wiederum das Eigenschaftsbild von PE 4360, welches sich in keiner Form von DMEA und B 75 unterschied.

Die nächste Tabelle zeigt das Eigenschaftsbild von Schäumen auf, welche unter Anwendung der Zubereitung von Zinkricinoleat mit einem entsprechend reduzierten MDSMOS® 29-Gehalt hergestellt wurden.

| Rezeptur | |
|---|---|
| 100 | Teile Polyol, Voranol® CP 3322 (Dow Chemical) |
| 2,4 | Teile Wasser |
| 1,0 | Teile Schaumstabilisator, TEGOSTAB® B 8002 (Goldschmidt) |
| 0,12 | Teile Zinnoctoat, KOSMOS® 29 |
| 0,25 | Teile Aminkatalysator, N,N-dimethyl-N',N'-2-hydroxy-(propyl)-1,3-propylendiamin |
| 32,0 | Teile Isocyanat, (Toluylendiisocyanat T80) (80 % 2,4 - Isomeres, 20 % 2,6 - Isomeres) |
| 1,0 | Teile Zubereitung Zinkricinoleat, (50 Gew.-% Zn-Salz) |

**Tabelle 9:**

| **Aminkatalysator** | **Steigzeit** **[s]** | **Raumgewicht [kg/cm**^{**3**}**]** | **Porosität*** | **CLD, 40 % Kompression [kPa] (ohne Vorbehandlung)** | **CLD, 40 % Kompression [kPa] nach 5 Std. 120 °C, 100 % rel. LF** | **CLD, 40 % Kompression [kPa] nach 2 Std. 180 °C** | **CLD, 40 % Kompression [kPa] nach 2 Std. 200 °C** |
|---|---|---|---|---|---|---|---|
| TEGOAMIN® DMEA ¹⁾ | 204 | 40,4 | 21 | 3,7 | 3,2 | 1,9 | total zerstört |
| TEGOAMIN® B 75 ²⁾ | 147 | 37,8 | 138 | 3,4 | 2,9 | 1,9 | total zerstört |
| 3) | 157 | 37,2 | 15 | 3,0 | 2,2 | total zerstört | total zerstört |
| PE 4360 ⁴⁾ | 217 | 39,0 | 90 | 3,4 | 3,1 | 1,5 | total zerstört |
| TEGOAMIN® DMEE ⁵⁾ | 179 | 38,8 | 21 | 3,3 | 2,9 | total zerstört | total zerstört |
| 6) | 146 | 36,8 | 21 | 2,9 | 2,4 | 1,2 | total zerstört |
| API ⁷⁾ | 189 | 39,2 | 107 | 3,2 | 2,5 | total zerstört | total zerstört |

| | | | | | | | |
|---|---|---|---|---|---|---|---|
| 1) - 7) vgl. Tabelle 7 | | | | | | | |
| * Luftdurchlässigkeit ist angegeben in mm Staudruck Wassersäule, welcher sich aufbaut, wenn ein konstanter Luftstrom durch den Schaum geleitet wird. Je höher der angegebene Wert, desto geschlossenzelliger ist der Schaum und umgekehrt. | | | | | | | |

**Tabelle 10:**

| **Aminkatalysator** | **Druckverformungsrest 22 Std., 90 % Kompression, 70 °C [%]** | | | |
|---|---|---|---|---|
| | **ohne Vorbehandlung** | **nach 5 Std.** **120 °C,** **100 % rel. LF** | **nach 2 Std.** **180 °C** | **nach 2 Std.** **200 °C** |
| TEGOAMIN® DMEA ¹⁾ | 4 | 6 | 6 | total zerstört |
| TEGOAMIN® B 75²⁾ | 5 | 7 | 10 | total zerstört |
| 3) | 8 | 11 | total zerstört | total zerstört |
| PE 4360 ⁴⁾ | 9 | 9 | 12 | total zerstört |
| TEGOAMIN® DMEE ⁵⁾ | 5 | 8 | total zerstört | total zerstört |
| 6) | 6 | 7 | 30 | total zerstört |
| API ⁷⁾ | 6 | 8 | total zerstört | total zerstört |

| | | | | |
|---|---|---|---|---|
| 1) - 7) vgl. Tabelle 7 | | | | |

Es zeigte sich, dass mit Zinkricinoleat cokatalysierte Schäume unter Anwendung höherer Temperaturen deutlich empfindlicher auf Re-Katalyse reagieren. So wurden nach einer Belastung von 2 Std. bei 200 °C alle hier hergestellten Schäume total zerstört. Unter Reduzierung der Temperatur von 200 °C auf 180 °C scheiden Amin 3), DMEE und interessanterweise auch Aminopropylimidazol aus, während mit Amin 6) hergestellte Schäume ebenfalls stark an Qualität einbüßen.

Wiederum positiv zu bewerten war das Verhalten von PE 4360, welches in seinem Eigenschaftsbild nicht wesentlich von DMEA und B 75 abwich.

Das Emissionsverhalten der zuvor beschriebenen Schäume wurde entsprechend der Daimler-Chrysler-Prüfanweisung BP VWT 709 VOC-Bestimmung (30 Min. bei 90 °C) durchgeführt. Dabei wurden folgende Ergebnisse erhalten:

**Tabelle 11:**

| | **ohne Zinkricinoleat** | | | **mit Zinkricinoleat** | | |
|---|---|---|---|---|---|---|
| | **2-Ethylhexansäure** **[µg/g]** | **Amin** **[µg/g]** | **Gesamtemission** **[µg]** | **2-Ethylhexansäure** **[µg/g]** | **Amin** **[µg/g]** | **Gesamtemission** **[µg]** |
| TEGOAMIN® DMEA ¹⁾ | 519 | - | 560 | 146 | 108 | 300 |
| TEGOAMIN® B 75 ²⁾ | 595 | 166 | 1 001 | 163 | 481 | 688 |
| 3) | 58 | - | 102 | 46 | - | 91 |
| PE 4360 ⁴⁾ | 423 | - | 467 | 87 | - | 133 |
| TEGOAMIN® DMEE ⁵⁾ | 438 | - | 490 | 113 | - | 184 |
| 6) | 480 | - | 528 | 132 | - | 175 |
| API ⁷⁾ | 512 | - | 568 | 74 | - | 115 |

| | | | | | | |
|---|---|---|---|---|---|---|
| 1) - 7) vgl. Tabelle 7 | | | | | | |

Unter Anwendung von Zinkricinoleat sank die durchschnittliche 2-Ethylhexansäureemission auf 25 %. Es wurde jedoch auch deutlich, dass bei Anwendung des nichtreaktiven Amins TEGOAMIN® B 75 und TEGOAMIN® DMEA die Emission deutlich anstieg.

Propoxyliertes DMAPA (PE 4360) wurde mit anderen Aminkatalysatoren verglichen. Unter Anwendung von Hydrolyse und erhöhter Temperatur wurde geprüft, inwieweit unterschiedliche Katalysatoren die Re-Katalyse steuern.

Alle Schäume wurden grundsätzlich durch die Temperatur- bzw. Hydrolysebelastung in ihren physikalischen Eigenschaften negativ beeinflusst. Es musste mit aller Deutlichkeit darauf hingewiesen werden, dass dieses Eigenschaftsbild nicht konsequenterweise den Aminen zugeschrieben werden konnte. So war es durchaus denkbar, dass ein Schaum auch ohne jegliche Anwendung eines Amines eine derartige Reduzierung der physikalischen Schaumeigenschaften erleiden könnte.

Als sicher konnte angesehen werden, dass PE 4360 in seinem Eigenschaftsbild die Re-Katalyse von mit diesem Produkt produzierten Schäumen in vergleichbarer Weise zu DMEA und B 75 beeinflusste.

Bei Produkten wie Amin 3) und DMEE war mit einem deutlichen Zerfall der damit produzierten Schäume zu rechnen. Irgendwo im Mittelfeld befanden sich Amin 6) und möglicherweise auch API, deren damit produzierte Schäume unter verschärften Alterungsbedingungen ebenfalls in ihren physikalischen Eigenschaften beeinträchtigt wurden.

Aufgrund der hier durchgeführten Untersuchungen konnte PE 4360 als geeigneter Katalysator für emissionsfreie Schäume angesehen werden.

### Beispiel 4:

Nachfolgende Beispiele verdeutlichen, dass unter Verwendung von Zinnricinoleat und PE 4360 einwandfreie Schäume mit einem unerwartet guten Alterungsverhalten hergestellt werden.

| Rezeptur 1: | |
|---|---|
| 100 | Teile Polyol, Voranol® CP 3322(Dow Chemical) |
| 2,4 | Teile Wasser |
| 1,0 | Teile Schaumstabilisator, TEGOSTAB® B 8002 (Goldschmidt) |
| 0,42 | Teile Zinnricinoleat |
| 0,25 | Teile N,N-dimethyl-N',N'-2-hydroxy(propyl)-1,3-propylendiamin PE 4360 |
| 32,0 | Teile Isocyanat, (Toluylendiisocyanat T80) (80 % 2,4 - Isomeres, 20 % 2,6 - Isomeres) |

**Tabelle 12:**

| Steigzeit [s] | Höhe [cm] | Rückfall [cm] | Raumgewicht [kg/m³] | Porosität* | CLD 40 % Kompr. [kPa] | Druckverforungsrest 22 Std. 70 °C, 90 % Kompr. [%] | nach Hydrolysealterung 5 Std. 120 °C | | nach Hydrolysealterung 2 Std. 180 °C | |
|---|---|---|---|---|---|---|---|---|---|---|
| | | | | | | | CLD 40 % Kompr. [kPa] | Druckverformungsrest 22 Std. 70 °C, 90 % Kompr. [%] | CLD 40 % Kompr. [kPa] | Druckverformungsrest 22 Std. 70 °C, 90 % Kompr. [%] |
| 187 | 22,4 | - 0,30 | 37,8 | 14 | 3,3 | 3 | 2.6 | 4 | 2,6 | 5 |

| | | | | | | | | | | |
|---|---|---|---|---|---|---|---|---|---|---|
| *Luftdurchlässigkeit ist angegebenen in mm Staudruck Wassersäule, welcher sich aufbaut, wenn ein konstanter Luftstrom durch den Schaum geleitet wird. Je höher der angegebene Wert, desto geschlossenzelliger ist der Schaum und umgekehrt. | | | | | | | | | | |

| Rezeptur 2: | |
|---|---|
| 100 | Teile Polyol, Voranol® CP 3322(Dow Chemical) |
| 5,0 | Teile Wasser |
| 1,0 | Teile Schaumstabilisator, TEGOSTAB® B 8002 (Goldschmidt) |
| 0,44 | Teile Zinnricinoleat |
| 0,25 | Teile N,N-dimethyl-N',N'-2-hydroxy(propyl)-1,3-propylendiamin PE 4360 |
| 32,0 | Teile Isocyanat, (Toluylendiisocyanat T80) (80 % 2,4 - Isomeres, 20 % 2,6 - Isomeres) |

**Tabelle 13:**

| Steigzeit [s] | Höhe [cm] | Rückfall [cm] | Raumgewicht [kg/m³] | Porosität* | CLD 40 % Kompr. [kPa] | Druckverformungsrest 22 Std. 70 °C, 90 % Kompr. [%] | nach Hydrolysealterung 5 Std. 120 °C | | nach Hydrolysealterung 2 Std. 180 °C | |
|---|---|---|---|---|---|---|---|---|---|---|
| | | | | | | | CLD 40 % Kompr. [kPa] | Druckverformungsrest 22 Std. 70 °C, 90 % Kompr. [%] | CLD 40 % Kompr. [kPa] | Druckverformungsrest 22 Std. 70 °C, 90 % Kompr. [%] |
| 81 | 27,0 | - 0,10 | 20,7 | 9 | 3,1 | 9 | 2,5 | 8 | 2.9 | 9 |

| | | | | | | | | | | |
|---|---|---|---|---|---|---|---|---|---|---|
| *Luftdurchlässigkeit ist angegebenen in mm Staudruck Wassersäule, welcher sich aufbaut, wenn ein konstanter Luftstrom durch den Schaum geleitet wird. Je höher der angegebene Wert, desto geschlossenzelliger ist der Schaum und umgekehrt. | | | | | | | | | | |

## Patentansprüche

1. Verwendung von Metallsalzen der Ricinolsäure oder deren Lösungen in wässrigen oder organischen Lösungsmitteln zur Herstellung von Polyurethanschäumen in Kombination mit reaktivem Amin der allgemeinen Formel (I) 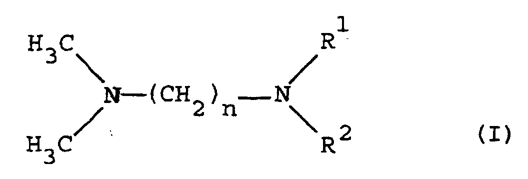 wobei
n = 1 bis 4,
R¹ und R² = (CH₂-CH₂-O)ₓH oder
= (CH₂-CH(CH₃)-O)ₓH oder
= (CH₂-CH(CH₂-CH₃)-O)ₓH,
x = 0,1,2,3 oder 4,
mit der Maßgabe ist, dass im Molekül mindestens ein x > 0 ist.

2. Verwendung nach Anspruch 1, **dadurch gekennzeichnet, dass** das Metallsalz abgeleitet ist von Zink und/oder Zinn.

3. Verwendung nach Anspruch 1 oder 2, **dadurch gekennzeichnet, dass** n in der allgemeinen Formel (I) = 3 ist.

4. Verwendung nach Anspruch 1, **dadurch gekennzeichnet, dass** x in der allgemeinen Formel (I) = 1 ist.

5. Verwendung nach einem der Ansprüche 1 bis 5, **dadurch gekennzeichnet, dass** man als reaktives Amin N,N-dimethyl-N',N'-2-hydroxy(propyl)-1,3-propylendiamin einsetzt.

## Claims

1. The use of reactive amines of the general formula (I) 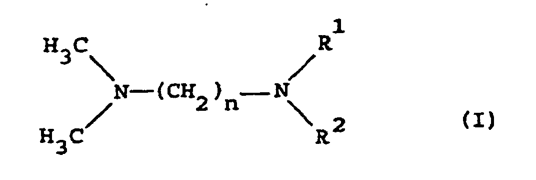 where
n is 1 to 4,
R¹ and R² are (CH₂-CH₂-O)ₓH or
(CH₂-CH(CH₃)-O)ₓH or
(CH₂-CH(CH₂-CH₃)-O)ₓH,
x is 0, 1, 2, 3 or 4,
with the proviso that, in the molecule, at least one x > 0,
in combination with metal salts or their solutions in aqueous or organic solvents for the preparation of polyurethane foams.

2. The use as claimed in claim 1, wherein the metal salt is derived from zinc and/or tin.

3. The use as claimed in claim 1 or 2, wherein n in the general formula (I) is 3.

4. The use as claimed in claim 1, wherein x in the general formula (I) is 1.

5. The use as claimed in any of claims 1 to 4, wherein the reactive amine used is N,N-dimethyl-N',N'-di-2-hydroxy(propyl)-1,3-propylenediamine.

## Revendications

1. Utilisation d'amines réactives de formule générale (I) 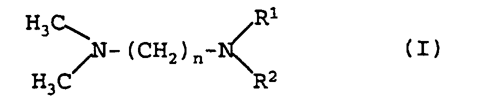 dans laquelle
n = 1 à 4,
R¹ et R² = (CH₂-CH₂-O)ₓH ou
= (CH₂-CH(CH₃)-O)ₓH ou
= (CH₂-CH(CH₂-CH₃)-O)ₓH,
x = 0, 1, 2, 3 ou 4,
sous réserve que, dans la molécule, l'un au moins des x est > 0,
en association avec des sels métalliques de l'acide ricinoléique ou leurs solutions dans des solvants aqueux ou organiques, pour la fabrication de mousses de polyuréthanne.

2. Utilisation selon la revendication 1, **caractérisée en ce que** le sel métallique est dérivé du zinc et/ou de l'étain.

3. Utilisation selon la revendication 1 ou 2, **caractérisée en ce que** n dans la formule générale (I) est égal à 3.

4. Utilisation selon la revendication 1, **caractérisée en ce que** x dans la formule générale (I) est égal à 1.

5. Utilisation selon l'une quelconque des revendications 1 à 4, **caractérisée en ce qu'**on utilise comme amine réactive la N,N-diméthyl-N',N'-di-2-hydroxy-(propyl)-1,3-propylènediamine.
